# EUROPEAN PATENT APPLICATION

(11) **EP 2 610 515 A1**
(43) Date of publication of application: **03.07.2013**
(21) Application number: 11819732.6
(22) Date of filing: 27.07.2011
(51) Int. Cl.: F16D 3/205

(54) **SLIDING UNIVERSAL JOINT**

(30) Priority: 23.08.2010 JP 2010185736
(71) Applicant: NTN Corporation, Osaka-shi, Osaka 550-0003 (JP)
(72) Inventor: SUGIYAMA Tatsuro, Iwata-shi Shizuoka 438-0037 (JP); USHIODA Yoshimasa, Iwata-shi Shizuoka 438-0037 (JP)
(74) Representative: Grünecker, Kinkeldey, Stockmair & Schwanhäusser
(86) International application number: PCT/JP2011/067075
(87) International publication number: WO 2012/026267

(57) **Abstract**

An object of the invention is to provide an arrangement for a sliding constant velocity universal joint which includes a coil spring employed therein to urge an intermediate shaft, so that a spring receptacle member will not interfere with a roller even at a large operating angle.

A sliding constant velocity universal joint includes: an outer joint member 11; a slidable inner joint member 12; an intermediate shaft 13 fitted through the center of the inner joint member 12; a spring receptacle member 37 contacted with a convex spheroidal surface 31 of the intermediate shaft 13; and a compressed coil spring 14 placed between the spring receptacle member 37 and the outer joint member 11. The spring receptacle member 37 is hat-shaped, having an inserting portion 38 and a flange portion 39. The inserting portion 38 is inserted into an end of the coil spring 14 whereas the flange portion 39 is contacted with the convex spheroidal surface 31 of the intermediate shaft 13.

## Description

### Technical Field

The present invention relates to constant velocity universal joints used in power transmission devices of, e.g. , automobiles and various kinds of industrial equipment, and more particularly to sliding constant velocity universal joints.

### Background Art

There is known a drive-power transmission structure for automobiles, using a pair of sliding constant velocity universal joints, where each universal joint in the pair is disposed between an axle of the left or the right wheel and a differential gear system via an intermediate shaft (Patent Literature 1). In the sliding constant velocity universal joint in this case, the intermediate shaft is subject to axial displacement and therefore indefinite in position, potentially leading to a situation that an end of the intermediate shaft will make contact with an inner end surface of an outer joint member of one of the constant velocity universal joints in the pair, resulting in generation of noise and/or vibration.

In order to prevent generation of these noise and vibration, there is utilized an arrangement where, in the other of the constant velocity universal joints, a coil spring is placed in a compressed state, between the inner end of the outer ring joint member and the other end of the said intermediate shaft thereby urging the intermediate shaft toward the said one constant velocity universal joint in the pair, and thereby pressing the end of the intermediate shaft to a receptacle member which is provided in the inner end surface of the outer joint member.

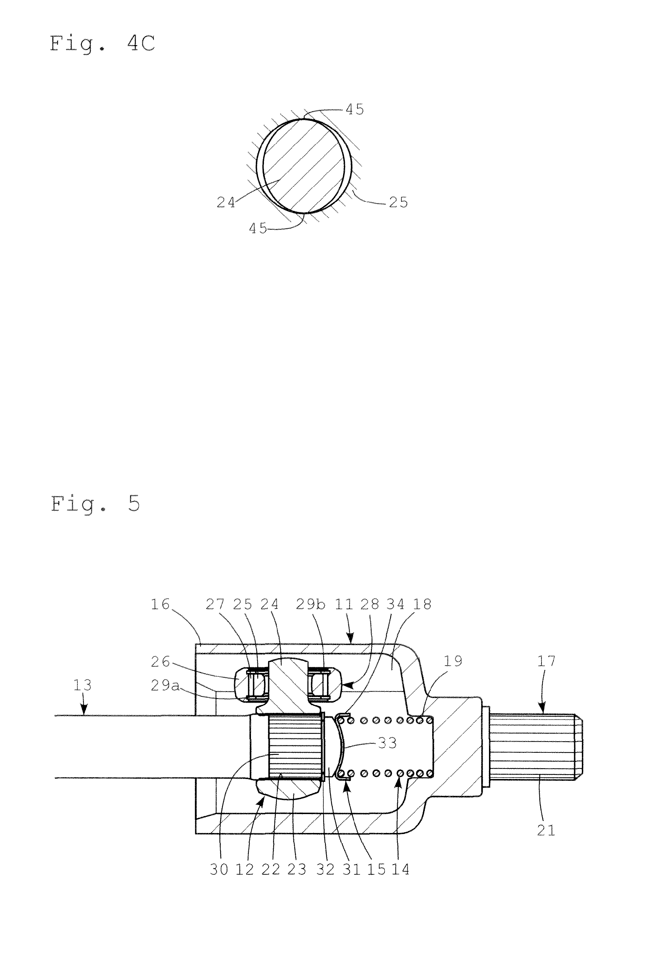

Fig. 5 shows such a conventional tripod sliding constant velocity universal joint which includes the coil spring as described. The figure shows a state where an operating angle is zero degree. This constant velocity universal joint is implemented by an assembly of an outer joint member 11, an inner joint member 12, an intermediate shaft 13, a coil spring 14 and a spring receptacle member 15. The intermediate shaft 13 is generally provided by a torque transmission shaft; however, the intermediate shaft 13 so termed herein refers to a torque transmission shaft which is interjacent to the other sliding constant velocity universal joint.

The outer joint member 11 is constituted by a cup-shaped mouth portion 16 which has one open end, and a stem portion 17 protruding coaxially therewith, out of the closed end of the cup, in a direction away from the mouth portion 16. An axial guide groove 18 is formed at a one-third equally dividing position in an inner circumferential surface of the mouth portion 16. Also, a spring receptacle recess 19 is formed at a center in an inner bottom surface. The stem portion 17 is formed with a spline 21 (the term includes serrations; the same applies hereinafter).

The inner joint member 12 has a radially protruding journal shaft, i.e., so called trunnion shaft 24, at a one-third equally dividing position around a boss 23. The boss 23 is formed with a spline hole 22 at its center. The trunnion shaft 24 is elliptically cylindrical, and a roller 28 which is constituted by an inner ring 25, an outer ring 26, and needle rollers 27 placed therebetween is pivotably fitted with a certain radical margin. The roller 28 is fitted slidably into the guide groove 18.

The inner ring 25 and the needle rollers 27 are integrated with the outer ring 26 by snap rings 29a, 29b which are interposed between an inner and an outer end surfaces of the outer ring 26.

The intermediate shaft 13 has an end portion formed with a spline shaft section 30. The spline shaft section 30 has its tip surface formed as a convex spheroidal surface 31. The spline shaft section 30 is fitted through the spline hole 22 of the inner joint member 12, and is fastened in place by a snap ring 32. The convex spheroidal surface 31 protrudes inward of the mouth portion 16, from the spline hole 22.

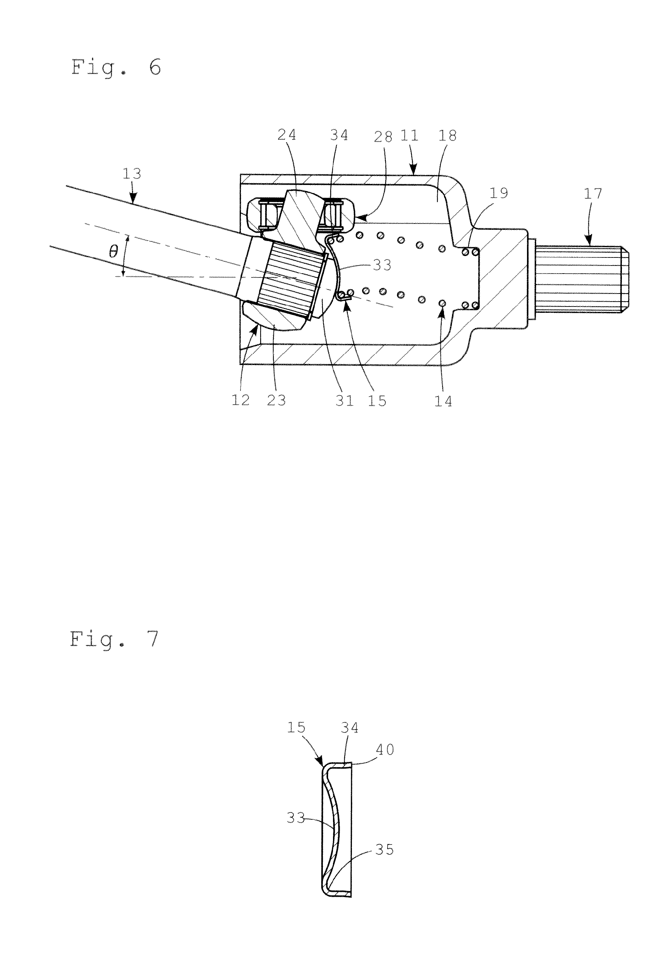

As shown in Fig. 7, the spring receptacle member 15 is a dish-shaped member having a bottom plate 33 which is formed into a concave spheroidal surface for contact with the convex spheroidal surface 31, and a low-walled cylindrical portion 34 which rises from a circumferential edge region of the bottom plate 33 toward the spring receptacle recess 19. The cylindrical portion 34 rises by a height which is approximately equal to two windings of the coil spring 14 under the compressed state shown in Fig. 5. A seat 35 for the coil spring 14 is provided by a corner region made by an edge region of an inner bottom surface of the bottom plate 33 and an inner circumferential surface of the cylindrical portion 34 rising therefrom.

The coil spring 14 is placed in a compressed state between the spring receptacle recess 19 and the spring receptacle member 15. On the spring receptacle member 15 side, the coil spring 14 has its end pressed onto the seat 35, i.e., onto the circumferential edge region of the bottom plate 33 along the inner circumferential surface of the cylindrical portion 34.

Fig. 6 shows an operating state at a certain predetermined operating angle θ (the angle in the figure is 15 degrees). Under this state, there can be a situation where the spring receptacle member 15 slips and tilts in a direction away from tilt of the intermediate shaft 13. Simultaneously, an end portion of the coil spring 14 moves away, resulting in a situation that said end portion of the coil spring 14 is bent with respect to the other end portion which is supported by and fixed in the spring receptacle recess 19.

### Citation List

### Patent Literature

Patent Literature 1: JP-A 2008-82393 Gazette(Fig. 2)

### Summary of Invention

### Technical Problem

Although the conventional constant velocity universal joint described above has no problem when the operating angle θ is zero degree or the angle is small, the spring receptacle member 15 tilts to a greater extent when the operating angle θ reaches a certain large angle as shown in Fig. 6, allowing an edge of the cylindrical portion 34 to interfere with a back surface (the surface which faces the spring receptacle member 15) of the roller 28. Such an interference destabilizes rotation of the roller 28, and can adversely affect operability of the constant velocity universal joint.

Especially, the back surface of the roller 28 is intricate with steps formed by the snap ring 29b and a fitting groove therefor, and interference by the edge of the cylindrical portion 34 of the spring receptacle member 15 leads to poor operation of the constant velocity universal joint.

It is therefore an object of the present invention to provide an arrangement in which the interference between the spring receptacle member and the roller is avoided even when the operating angle of the sliding constant velocity universal joint becomes large and the spring receptacle member becomes tilted, thereby providing a sliding universal joint of a superior operability.

### Solution to Problem

In order to achieve the above-described obj ect, the present invention provides a sliding constant velocity universal joint which inclues: an outer joint member; an inner joint member slidable with respect to the outer joint member; a torque transmission shaft fitted through a center of the inner joint member; a spring receptacle member having a concave spheroidal surface contacted with a convex spheroidal surface at an end of the torque transmission shaft; and a compressed coil spring placed between the spring receptacle member and an inner bottom surface of the outer joint member. The outer joint member has a stem portion working together with the torque transmission shaft in transmitting torque at a predetermined operating angle. In this sliding constant velocity universal joint, the spring receptacle member includes an inserting portion having a cylindrical outer circumferential surface; and a flange portion extending radially outward at a base region of the inserting portion. The inserting portion is fitted to an inner diameter surface at an end of the coil spring whereas the flange portion has its inner surface being in contact with the convex spheroidal surface of the torque transmission shaft.

According to the arrangement described above, as the operating angle becomes large, causing the spring receptacle member to tilt toward the roller, the coil spring deforms and might interfere with the roller. However, the spring receptacle member will not make direct interference with the roller because it is inserted into the coil spring along the spring's inner diameter side. The outer shape of the coil spring is smoother than the edge of the spring receptacle member and therefore, contact resistance is smaller than in a case where interference is made by the edge, reducing adverse influence to the rotation of the roller.

Although the flange portion is exposed radially outward from the end of the coil spring, the flange portion moves toward the boss portion of the inner joint member, i.e., it moves in toward a base portion of the trunnion shaft, when the spring receptacle member is tilted. Therefore, the edge of the flange does not interfere with the roller.

### Advantageous Effects of Invention

Since the spring receptacle member according to the present invention includes a portion having a cylindrical outer shape and working as an insertion portion for insertion into the coil spring as has been described, the insertion portion does not interfere directly with the roller even when the operating angle becomes large, offering an advantage of superior operability of the sliding constant velocity universal joint.

### Brief Description of Drawings

Fig. 1 is a sectional view of a sliding constant velocity universal joint according to Embodiment 1 when an operating angle is 0°.
Fig. 2 is a sectional view of the universal joint in Fig. 1 when the operating angle θ is a certain predetermined angle.
Fig. 3A is an expanded sectional view of a portion taken from Fig. 1.
Fig. 3B is a sectional view of a variation of a spring receptacle member.
Fig. 4A is a partial sectional view of a variation of a trunnion shaft.
Fig. 4B is a partial sectional view of another variation of the trunnion shaft.
Fig. 4C is a sectional view taken in line c-c in Fig. 4B.
Fig. 5 is a sectional view of a conventional sliding constant velocity universal joint when an operating angle is 0°.
Fig. 6 is a sectional view of the universal joint in Fig. 5 when the operating angle e is a certain predetermined angle.
Fig. 7 is an expanded sectional view of a spring receptacle member in Fig. 5.

### Description of Embodiments

Hereinafter, embodiments of the present invention will be described based on the attached drawings.

### [Embodiment 1]

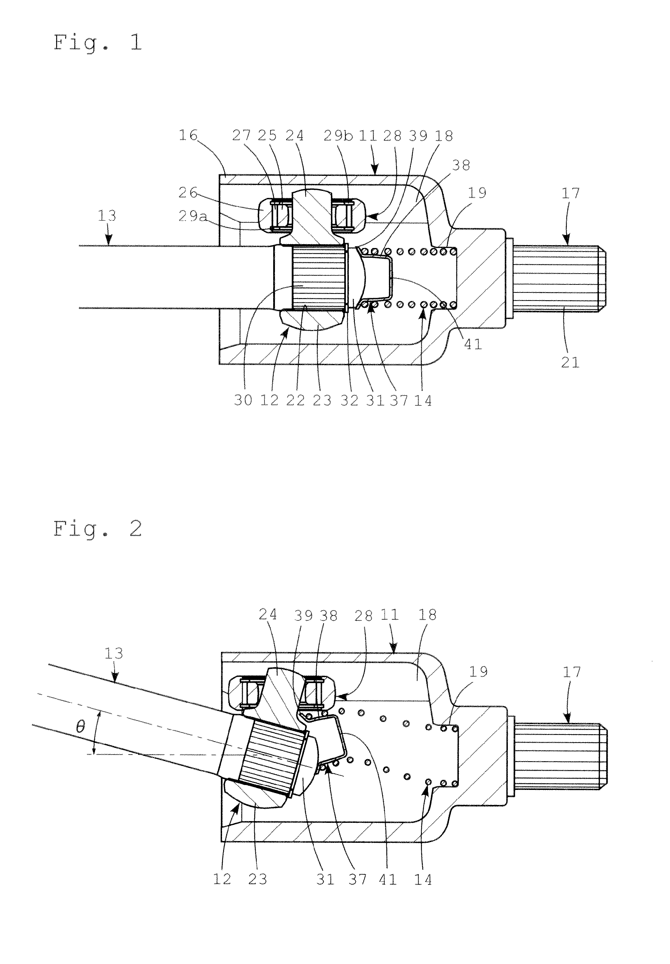

Fig. 1 through Fig. 4 show Embodiment 1, which is a tripod sliding constant velocity universal joint exactly the same as those described in "Background Art" based on Fig. 5 through Fig. 7, excluding only the shape of the spring receptacle member 15. Therefore, Fig. 1 through Fig. 4 use the same reference symbols for the same parts and components, with all descriptions made in "Background Art" being applied thereto, and the following description will primarily be focused on differences.

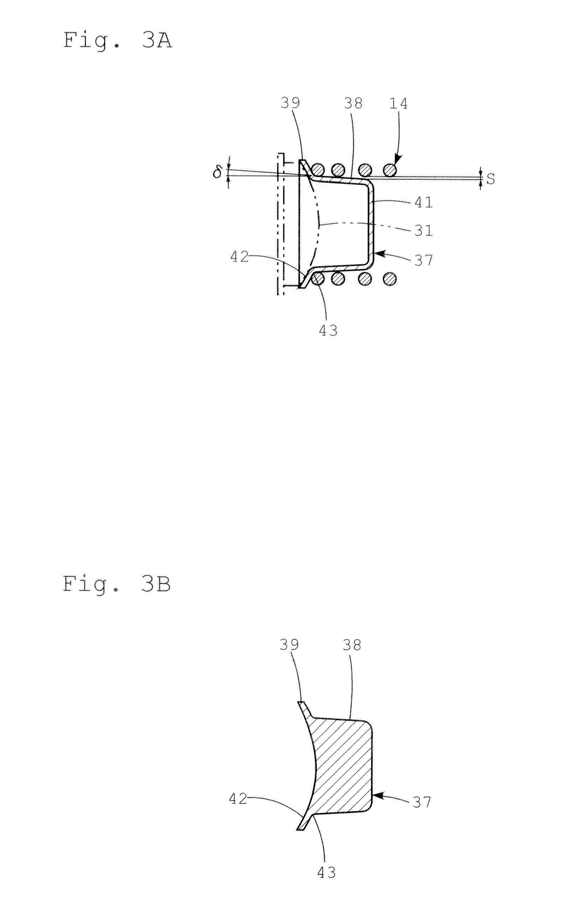

As shown in Fig. 3A, a spring receptacle member 37 in this case includes an inserting portion 38 for fitting to an inner diameter surface at an end of the coil spring 14; and a flange portion 39 protruding from a base region of the inserting portion 38 radially outward thereof. The inserting portion 38 has a cylindrical outer circumferential surface. The inserting portion 38 has a height approximately equal to three to four windings of the coil spring 14 when the coil is in the most compressed state (see Fig. 1). Also, the inserting portion 38 is tapered at a taper angle δ so that its diameter becomes slightly smaller from a base region (large-end region) where the flange portion 39 is, toward the other end, i.e., a tip portion.

As the inserting portion 38 is inserted to fit to the inner diameter surface at an end of the coil spring 14, the first one wind of the coil spring 14 makes a tight fit around the inserting portion 38 at the portion's base end region which is the region close to the flange portion 39 sized for the tight-fit insertion. This integrates the spring receptacle member 37 and the coil spring 14 with each other. The remaining windings which are away from the base region have a gradually increasing gap S so as to ensure undisturbed expansion and contraction of the coil spring 14.

The inserting portion 38 may be provided by a cylinder having two open ends. Normally, however, it is formed into a cup-like shape with one of the ends formed with a closed surface 41 in order to ensure a predetermined strength. The flange portion 39 may have a simple flange-like structure protruding in the direction of its outer diameter; however, it is preferable, as shown in figures, that the flange is curved in its entire thickness to have a concave spheroidal surface 42 so that the flange has an inner surface (surface facing the intermediate shaft 13) which makes surface contact with the convex spheroidal surface 31 of the intermediate shaft 13.

A corner portion made by an outer surface of the flange portion 39 and the rising wall of the inserting portion 38 provides a seat 43 to which the end of the coil spring 14 is pressed upon. An outer diametric edge of the flange portion 39 aligns with an outer diametric edge of the convex spheroidal surface 31.

In the case where the inserting portion 38 is provided by a cylindrical body which has a closed end, and the flange portion 39 protrudes radially outward, in the opposite direction from the closed end, so that the entire member has a hat shape as has been described above, the member can be formed of a metal by means of pressing. Also, it can be formed of a synthetic resin as well. Further, it can be made of a sintered alloy; however in this case, the inserting portion 38 may be solid instead of hollow, as shown in Fig. 3B for reasons of strength and formation process.

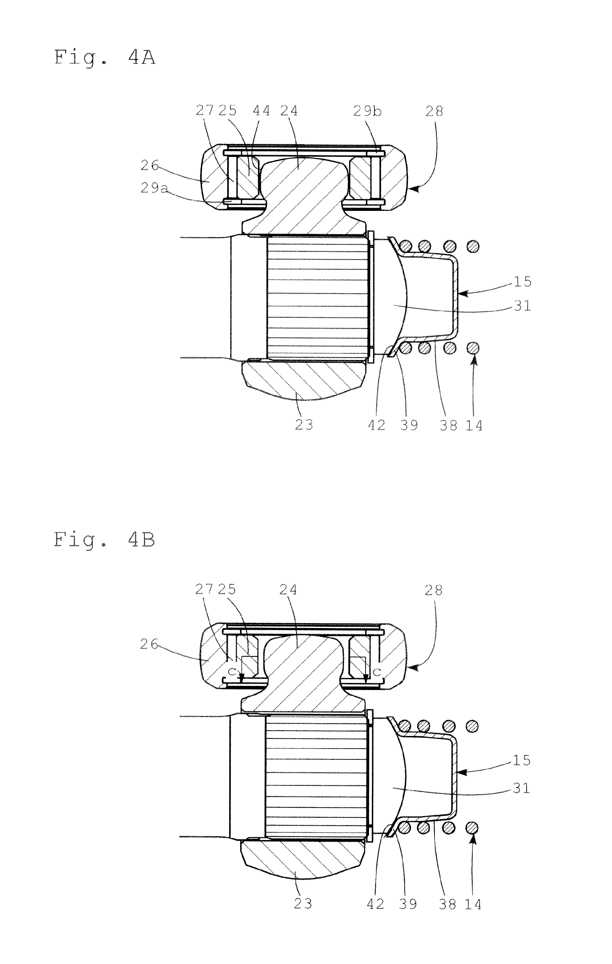

Fig. 4A shows an arrangement of a pivoting structure for the roller 28 which is fitted around the trunnion shaft 24 of the inner joint member 12. Specifically, the trunnion shaft 24 has a spherical portion 44 so that the spherical portion 44 makes line contact with the inner ring 25. Fig. 4B and Fig. 4C show an arrangement where the trunnion shaft 24 has an ellipsoidal section. In this case, the trunnion shaft 24 and the inner ring 25 of the roller 28 make mutual contact at tangent points 45 on the major axis of the ellipse.

**Reference Signs List**

| | |
|---|---|
| 11 | outer joint member |
| 12 | inner joint member |
| 13 | intermediate shaft |
| 14 | coil spring |
| 15 | spring receptacle member |
| 16 | mouth portion |
| 17 | stem portion |
| 18 | guide groove |
| 19 | spring receptacle recess |
| 21 | spline |
| 22 | spline hole |
| 23 | boss |
| 24 | trunnion shaft |
| 25 | inner ring |
| 26 | outer ring |
| 27 | needle roller |
| 28 | roller |
| 29a, 29b | snap ring |
| 30 | spline shaft section |
| 31 | convex spheroidal surface |
| 32 | snap ring |
| 33 | bottom plate |
| 34 | cylindrical portion |
| 35 | seat |
| 37 | spring receptacle member |
| 38 | inserting portion |
| 39 | flange portion |
| 41 | closed surface |
| 42 | concave spheroidal surface |
| 43 | seat |
| 44 | spherical portion |
| 45 | tangent point |

## Claims

1. A sliding constant velocity universal joint comprising: an outer joint member; an inner joint member slidable with respect to the outer joint member; a torque transmission shaft fitted through a center of the inner joint member; a spring receptacle member having a concave spheroidal surface contacted with a convex spheroidal surface at an end of the torque transmission shaft; and a compressed coil spring placed between the spring receptacle member and an inner bottom surface of the outer joint member; the outer joint member having a stem portion working together with the torque transmission shaft in transmitting torque at a predetermined operating angle, wherein the spring receptacle member includes: an inserting portion having a cylindrical outer circumferential surface; and a flange portion extending radially outward at a base region of the inserting portion, the inserting portion being fitted to an inner diameter surface at an end of the coil spring, the flange portion having its inner surface being in contact with the convex spheroidal surface of the torque transmission shaft.

2. The sliding constant velocity universal joint according to Claim 1, wherein the flange portion of the spring receptacle member has its inner surface formed into a concave spherioidal surface conforming to the convex spheroidal surface of the torque transmission shaft.

3. The sliding constant velocity universal joint according to Claim 1 or 2, wherein a corner region made by an outer surface of the flange portion and a rising wall of the inserting portion provides a seat for an end of the coil spring.

4. The sliding constant velocity universal joint according to one of Claims 1 through 3, wherein the torque transmission shaft is provided by an intermediate shaft connected to an inner member of another sliding constant velocity universal joint.

5. The sliding constant velocity universal joint according to one of Claims 1 through 4, wherein the inserting portion has a height within a range of three through four windings of the compressed coil spring.

6. The sliding constant velocity universal joint according to one of Claims 1 through 5, wherein the inserting portion has a taper of gradually decreasing diameter from the flange portion to a tip portion.

7. The sliding constant velocity universal joint according to one of Claims 1 through 6, wherein the inserting portion has a base end region which is close to the flange portion and is sized for a tight fit to the inserting portion, whereas regions other than the base region has a gap from the coil spring.

8. The sliding constant velocity universal joint according to one of Claims 1 through 7, wherein the inserting portion is provided by a cylinder.

9. The sliding constant velocity universal joint according to Claim 8, wherein an end of the cylinder is closed, giving the spring receptacle member a shape of a hat as a whole.

10. The sliding constant velocity universal joint according to Claim 8 or 9, wherein the spring receptacle member is made of a pressed metal.

11. The sliding constant velocity universal joint according to one of Claims 1 through 10, wherein the spring receptacle member is made of a sintered metal.

12. The sliding constant velocity universal joint according to one of Claims 1 through 10, wherein the spring receptacle member is made of a synthetic resin.
